# EUROPÄISCHE PATENTSCHRIFT

(11) **EP 2 280 202 B1**
(45) Veröffentlichungstag und Bekanntmachung des Hinweises auf die Patenterteilung: **18.03.2015**
(21) Anmeldenummer: 10170998.8
(22) Anmeldetag: 28.07.2010
(51) Int. Cl.: F16J 15/32, F16C 21/00, F16C 33/78, F16C 41/00

(54) **Dichtungsanordnung für eine Radlagerung eines Kraftfahrzeuges**
Seal assembly for a wheel bearing of a motor vehicle
Dispositif d'étanchéité pour un palier de roue d'un véhicule automobile

(30) Priorität: 29.07.2009 DE 102009035110
(43) Veröffentlichungstag der Anmeldung: 02.02.2011
(73) Patentinhaber: Schaeffler Technologies AG & Co. KG, 91074 Herzogenaurach (DE)
(72) Erfinder: Häpp, Alexander, 97461, Hofheim (DE); Walter, Wilhelm, 97490, Poppenhausen (DE)

(56) Entgegenhaltungen:
- EP-A2- 0 276 877
- EP-A2- 0 836 021
- DE-A1- 4 231 332
- FR-A1- 2 574 501
- US-A1- 2003 230 849

## Beschreibung

### Gebiet der Erfindung

Die Erfindung betrifft eine Dichtungsanordnung, insbesondere für eine Radlagerung eines Kraftfahrzeuges, umfassend einen äußeren, feststehenden Ring und einen inneren, rotierbaren Ring, welche in einem, zwischen sich ausgebildeten Innenraum eine Hauptdichtung mit zumindest einer Dichtlippe aufnehmen, die sich zwischen radialen Abschnitten des inneren und des äußeren Rings in axialer Richtung und nach radial außen orientiert erstreckt, wobei elastische Haltemittel vorgesehen sind, welche ein axiales Abgleiten des inneren Ringes von dem äußeren Ring in eine Richtung unterbinden.

Dichtungsanordnungen der im Vorfeld beschriebenen Art finden insbesondere im Bereich rotierender Elemente, wie beispielsweise Wellen, oder bei Wälzlagerungen Anwendung, bei denen ein Eintrag von Schmutzpartikeln und Flüssigkeiten in einen Innenbereich des jeweiligen Bauteils zu verhindern ist. Auf dem Gebiet der Kraftfahrzeuge sind hierbei beispielsweise Radlagerungen oder Lagerungen von unter dem Fahrzeugboden verlaufenden Kardanwellen direkten Umwelteinflüssen ausgeliefert, was bei einem Eintrag von Partikeln in den Innenbereich des Wälzlagers zu dessen Ausfall und im Extremfall zu einem Liegenbleiben des jeweiligen Fahrzeuges führen kann.

In der Umgebung von Radlagern eines Kraftfahrzeuges werden zudem üblicherweise Sensoren zur Erfassung der Drehzahl des jeweiligen Rades vorgesehen, um die zur Funktionstüchtigkeit eines elektronischen Bremsregelsystems benötigten Parameter gewinnen zu können.

### Stand der Technik

Aus der DE 198 53 187 A1 ist eine Dichtungsanordnung eines Wälzlagers bekannt, die über einen äußeren, feststehenden Ring und einen inneren, rotierbaren Ring mit jeweils L-förmigen Querschnitten verfügt. Die beiden Ringe bilden dabei einen, zwischen sich liegenden Innenraum aus, in welchem eine Hauptdichtung zur Abdichtung eines Innenbereichs des Wälzlagers vorgesehen ist. Die Hauptdichtung ist dabei über einen statischen Dichtungsteil mit dem äußeren Ring verbunden und weist mehrere Dichtlippen auf, die im Einzelnen in axialer oder radialer Richtung mit dem inneren Ring oder einem Innenring des Wälzlagers in Kontakt stehen. Des Weiteren bildet der statische Dichtungsteil der Hauptdichtung in einer axialen Verlängerung Haltemittel in Form von elastischen Nasen aus, über welche ein Abgleiten des inneren Rings vom äußeren Ring in eine Richtung wirksam unterbunden werden kann. Mittels dieser Haltemittel kann ein Auseinanderfallen der Dichtungsanordnung vor dem Einfügen in das Wälzlager wirksam verhindert werden.

Nachteilhaft an einer Dichtungsordnung des Standes der Technik ist allerdings, dass die Dichtlippen der Hauptdichtung aufgrund des ständigen Andrückens an den inneren, rotierenden Ring zu erheblichen Reibverlusten beitragen.

Aus der DE 42 31 332 ist eine gattungsgemäße Dichtungsanordnung bekannt.

### Aufgabe der Erfindung

Es ist daher die Aufgabe der vorliegenden Erfindung, eine Dichtungsanordnung zu schaffen, welche sich durch eine verminderte Innenreibung auszeichnet. Zudem sollte diese Dichtungsanordnung insbesondere für den Einsatz im Bereich beengter Bauraumverhältnisse eines Radlagers mit Drehzahlsensorik geeignet ist.

Diese Aufgabe wird ausgehend vom Oberbegriff des Anspruchs 1 in Verbindung mit dessen kennzeichnenden Merkmalen gelöst. Die darauf folgenden, abhängigen Ansprüche geben jeweils vorteilhafte Weiterbildungen der Erfindung wieder.

### Offenbarung der Erfindung

Die Erfindung umfasst die technische Lehre, dass die Hauptdichtung mit dem inneren Ring über einen statischen Dichtungsteil verbunden ist, welcher den radialen Abschnitt des inneren Ringes vollständig umgibt. Des Weiteren bildet der radiale Abschnitt Mittel eines Encoders für einen Drehzahlsensor aus. Durch die Platzierung der Hauptdichtung auf dem inneren Ring wirken die, bei Rotation des inneren Rings auftretenden Fliehkräfte auf die zumindest eine Dichtlippe ein, was ab einer bestimmten Fliehkrafthöhe zu einem Abheben der Dichtlippe vom radialen Abschnitt des äußeren Rings führt. Dementsprechend wird bei niedrigen Drehzahlen des inneren Rings durch den Kontakt der zumindest einen Dichtlippe mit dem äußeren Ring eine zuverlässige Dichtwirkung erreicht, während bei höheren Drehzahlen die Reibung der Dichtungsanordnung durch Abheben der Dichtlippe deutlich reduziert werden kann. Dies resultiert in einer Verminderung der durch die Dichtungsanordnung erzeugten Reibungsverluste und bewirkt bei Anwendung im Bereich eines Radlagers eine Verminderung des Kraftstoffverbrauchs. Die Integration eines Encoders für einen Drehzahlsensor in den radialen Abschnitt des inneren Rings macht die Dichtungsanordnung zudem insbesondere für die Anwendung im Bereich eines Radlagers geeignet, da der benötigte Bauraum hierdurch deutlich reduziert werden kann. Dabei wird durch die vollständige Ummantelung des radialen Abschnitts mit dem statischen Dichtungsteil die Funktionstüchtigkeit der Dichtungsanordnung gewährleistet und im selben Moment ein Schutz des gebildeten Encoders vor Umwelteinflüssen ermöglicht.

Entsprechend einer Ausführungsform der Erfindung liegen die Mittel des Encoders in Form von mehreren Ausnehmungen vor, welche äquidistant zueinander auf einer geschlossenen Kreisbahn des Umfangs des radialen Abschnitts verteilt sind. Vorteilhafterweise kann hierdurch in Kombination mit einem aktiven Sensor, beispielsweise einem induktiven Sensor, auf zuverlässige Art und Weise die Drehzahl des inneren Rings und damit bei Anwendung im Bereich eines Radlagers auch die Drehzahl des jeweiligen Rades ermittelt werden. Dabei werden durch die vollständige Umschließung des radialen Abschnitts des inneren Rings mit dem statischen Dichtungsteil auch die Ausnehmungen vollständig mit Dichtungsmaterial verschlossen. Folglich wird ein Eindringen von Flüssigkeiten und Schmutzpartikel in den Innenraum der Dichtungsanordnung über die Ausnehmungen wirksam verhindert, gleichzeitig aber auch die Funktionsweise des induktiven Sensors gewährleistet.

Gemäß einer alternativen Ausführungsform der Erfindung liegen die Mittel des Encoders in Form einer Anordnung gleichartiger, dauermagnetischer Nord- und Südpolareale vor, welche alternierend auf einer geschlossenen Kreisbahn des Umfangs des radialen Abschnitts angeordnet sind. In diesem Fall kann die Ermittlung der Drehzahl des inneren Rings mit Hilfe eines aktiven Sensors, wie einem magnetoresistiven Sensor, erfolgen, wodurch die Signalqualität, insbesondere auch bei niedrigen Drehzahlen und Temperaturunterschieden, deutlich verbessert ist. Durch den, den radialen Abschnitt des inneren Ringes vollständig umschließenden, statischen Dichtungsteil werden dabei die Polareale zusätzlich wirksam vor Umgebungseinflüssen geschützt.

In Weiterbildung der Erfindung sind die Haltemittel durch eine axiale Verlängerung des statischen Dichtungsteils mit einer umlaufenden, radial in Richtung des äußeren Rings hervorstehenden Rinne gebildet. Mittels der somit elastisch ausgebildeten Rinne kann ein problemloses Zusammenfügen der Dichtungsanordnung vor dem Verbau in dem jeweiligen Anwendungsbereich erfolgen und gleichzeitig ein Auseinanderfallen der hierdurch gebildeten Baueinheit ausgeschlossen werden. Es ist allerdings auch ebenso denkbar, die Haltemittel durch eine aus Segmenten zusammengesetzte, unterbrochene Rinne zu bilden.

Es ist eine vorteilhafte Ausführungsform der Erfindung, dass die Hauptdichtung über eine Radialdichtlippe verfügt, die sich ausgehend von dem radialen Abschnitt des inneren Rings in Richtung des äußeren Rings und dem Innenraum abgewendet erstreckt. Durch diese zusätzliche Dichtlippe der Hauptdichtung wird die Dichtwirkung der Dichtungsanordnung verbessert, indem Flüssigkeiten und Schmutzpartikel am Hineingelangen in den, zwischen dem radialen Abschnitt des inneren Rings und dem äußeren Ring gebildeten Spalt gehindert werden. Zweckmäßigerweise steht die Radialdichtlippe hierbei mit dem äußeren Ring in Kontakt, wodurch die Dichtwirkung in diesem Bereich weiter gesteigert werden kann.

Der erfindungsgemäße statische Dichtungsteil weist am Ende des radialen Abschnitts des inneren Rings eine, in Richtung des äußeren Rings ausgeprägte und dem Innenraum abgewendete Erhebung mit einer Kante auf. Mittels der Kante wird in diesem Bereich ein Strömungsabriss erzeugt, was in Kombination mit der, durch Rotation des inneren Rings erzeugten Abschleuderwirkung insbesondere Flüssigkeiten am Eindringen in den Innenraum der Dichtungsanordnung hindert.

Gemäß einer weiteren, vorteilhaften Ausführungsform der Erfindung ist der äußere Ring, insbesondere an seinen, dem Innenraum abgewendeten Flächen, ganz oder teilweise mit einer statischen Dichtung versehen. Durch das Vorsehen einer statischen Dichtung im Bereich des äußeren Rings kann ein Unterwandern der Dichtungsanordnung über, zwischen dem äußeren Ring und dem jeweils daran anschließenden Bauteil gebildete Spalte auf zuverlässige Art und Weise verhindert werden.

Vorteilhafterweise bildet die statische Dichtung im Bereich eines Außendurchmessers des äußeren Rings eine umlaufende Montagelippe aus. Durch diese Maßnahme kann in Kombination mit dem Vorsehen einer entsprechenden Nut an dem angrenzenden Bauteil die Montage des äußeren Rings deutlich vereinfacht werden, indem die Montagelippe in die Nut eingeclippt wird.

In Weiterbildung der Erfindung verfügt der äußere Ring über eine, nach radial außen weisende Erstreckung. Hierdurch wird ein axialer Anschlag des äußeren Rings ausgebildet, was die Montage der Dichtungsanordnung an der gewünschten Stelle vereinfacht und eine gewünschte, axiale Position definiert. Weitere, die Erfindung verbessernde Maßnahmen werden nachstehend gemeinsam mit der Beschreibung bevorzugter Ausführungsformen der Erfindung anhand der Figuren näher dargestellt.

### Kurzbeschreibung der Zeichnungen

Es zeigt:
- Figur 1: einen Querschnitt der Dichtungsanordnung gemäß einer ersten Ausführungsform;
- Figur 2: einen Querschnitt der Dichtungsanordnung gemäß einer weiteren, zweiten Ausführungsform;
- Figur 3: einen Querschnitt der erfindungsgemäßen Dichtungsanordnung gemäß einer Ausführungsform;
- Figur 4: einen Querschnitt Dichtungsanordnung gemäß einer dritten Ausführungsform; und
- Figur 5: einen Querschnitt der Dichtungsanordnung gemäß einer letzten, vierten Ausführungsform.

### Ausführliche Beschreibung der Zeichnungen

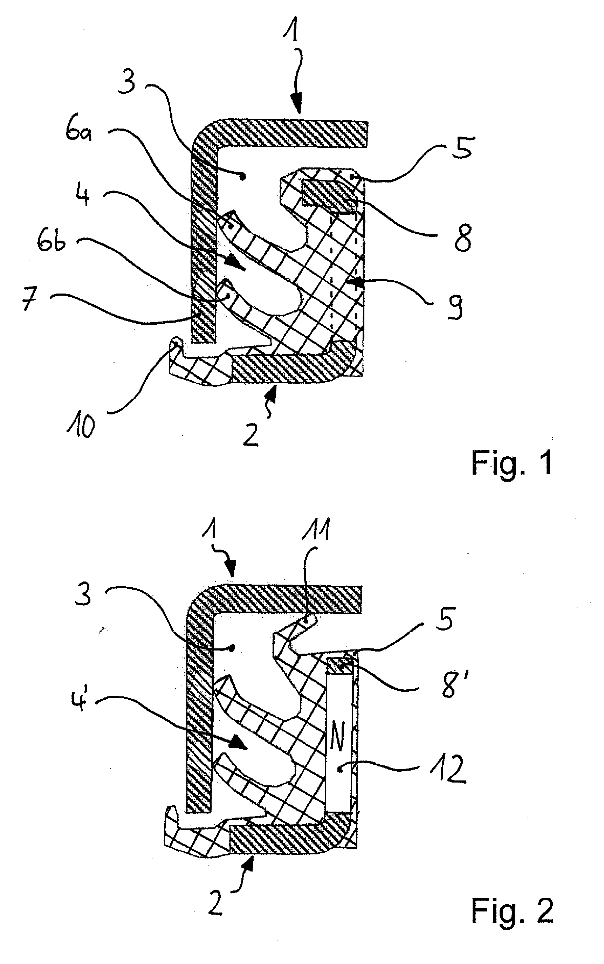

In Figur 1 ist ein Querschnitt einer Dichtungsanordnung zu sehen. Diese umfasst einen äußeren Ring 1 und einen inneren Ring 2, die jeweils einen L-förmigen Querschnitt aufweisen. In einem verbauten Zustand der Dichtungsanordnung ist der äußere Ring 1 mit einem feststehenden Element, beispielsweise einem Außenring eines Wälzlagers, verbunden, während der innere Ring 2 fest mit einem rotierbaren Element, zum Beispiel einem Innenring eines Wälzlagers, in Verbindung steht. Der innere Ring 2 und der äußere Ring 1 definieren gemeinsam einen zwischenliegenden Innenraum 3, in welchem eine Hauptdichtung 4 platziert ist. Diese Hauptdichtung 4 ist dabei über einen statischen Dichtungsanteil 5 fest mit dem inneren Ring 2 verbunden und verfügt über zwei Dichtlippen 6a und 6b, die sich in Richtung des äußeren Rings 1 und nach radial außen orientiert erstrecken und an einem radialen Abschnitt 7 des äußeren Rings 1 zur Anlage kommen. Dabei verfügen die Dichtlippen 6a und 6b über eine derartige Steifigkeit, dass diese bei Stillstand des Systems und niedrigen Drehzahlen des inneren Rings 2 an den radialen Abschnitt 7 andrücken, bei höheren Drehzahlen des inneren Rings 2 jedoch von diesem abheben und dementsprechend ab diesem Zeitpunkt nicht mehr zu Reibverlusten der Dichtungsanordnung beitragen.

Eine Besonderheit der Dichtungsanordnung besteht darin, dass ein radialer Abschnitt 8 des inneren Rings 2 mit Ausnehmungen 9 versehen ist, die entlang des Umfangs des radialen Abschnitts 8 äquidistant zueinander auf einer geschlossenen Kreisbahn angeordnet sind. Dabei fungieren diese Ausnehmungen 9 als Encoder eines - hier nicht dargestellten -eines induktiven Drehzahlsensor, so dass auf dem Fachmann bekannte Art und Weise eine Drehzahl des inneren Rings 2 ermittelt werden kann. Bei einem Verbau der Dichtungsanordnung im Bereich eines Radlagers eines Kraftfahrzeuges kann somit die Drehzahl des jeweiligen Rades bei geringem Bauraumbedarf erfasst werden. Der statische Dichtungsteil 5 der Hauptdichtung umgibt hierbei den radialen Abschnitt 8 des inneren Rings 2 vollständig und füllt auch die Ausnehmungen 9 vollständig aus. Somit werden Verunreinigungen an einem Hineingelangen in den Innenraum 3 über die Ausnehmungen 9 gehindert ohne die Wirksamkeit des Encoders zu beeinflussen.

Im Bereich des radialen Abschnitts 7 des äußeren Rings 1 verfügt der statische Dichtungsteil 5 des Weiteren über eine axiale Verlängerung, an deren Ende eine umlaufende Rinne 10 ausgebildet ist. Diese Rinne 10 ragt dabei radial in Richtung des äußeren Rings 1 vor und verhindert bei einem axialen Auseinanderwandern der beiden Ringe 1 und 2 beim Handling oder im montierten Zustand ab einem Kontakt mit dem äußeren Ring 1 ein weiteres Abgleiten.

In Figur 2 ist eine zweite Dichtungsanordnung im Querschnitt zu sehen. Im Unterschied zu der im Vorfeld beschriebenen Variante verfügt die Hauptdichtung 4' in diesem Fall über eine zusätzliche Radialdichtlippe 11, welche sich ausgehend von dem radialen Abschnitt 8' des inneren Rings 2 in Richtung des äußeren Rings 1 erstreckt und nach axial außen gerichtet ist. Dabei steht diese Radialdichtlippe 11 mit dem äußeren Ring 1 in Kontakt, so dass Schmutzpartikel, die in den, zwischen dem äußeren Ring 1 und dem radialen Abschnitt 8' des inneren Rings 2 ausgebildeten Spalt gelangt sind, an einem weiteren Vordringen in den Innenraum 3 wirksam gehindert werden. Als weiteren Unterschied nimmt der radiale Abschnitt 8' des inneren Rings 2 entlang seines Umfangs gleichartige, dauermagnetische Nord- und Südpolareale 12 auf, die hierbei alternierend angeordnet sind und von denen in dieser Ansicht nur ein dauermagnetisches Nordpolareal N zu sehen ist. Diese Polareale 12 bilden dabei den Encoder eines - nicht dargestellten - magnetoresistiven Sensors, über welchen die Drehzahl des inneren Rings 2 auf dem Fachmann bekannte Art und Weise ermittelt werden kann. Durch den, den radialen Abschnitt 8' vollständig ummantelnden statischen Dichtungsteil 5 der Hauptdichtung 4' werden die Polareale 12 des Weiteren wirksam vor Umwelteinflüssen geschützt. Folglich werden zum einen eine zuverlässige Abdichtung der Dichtungsanordnung und zum anderen die Funktionsweise der Drehzahlerfassung des inneren Rings 2 garantiert.

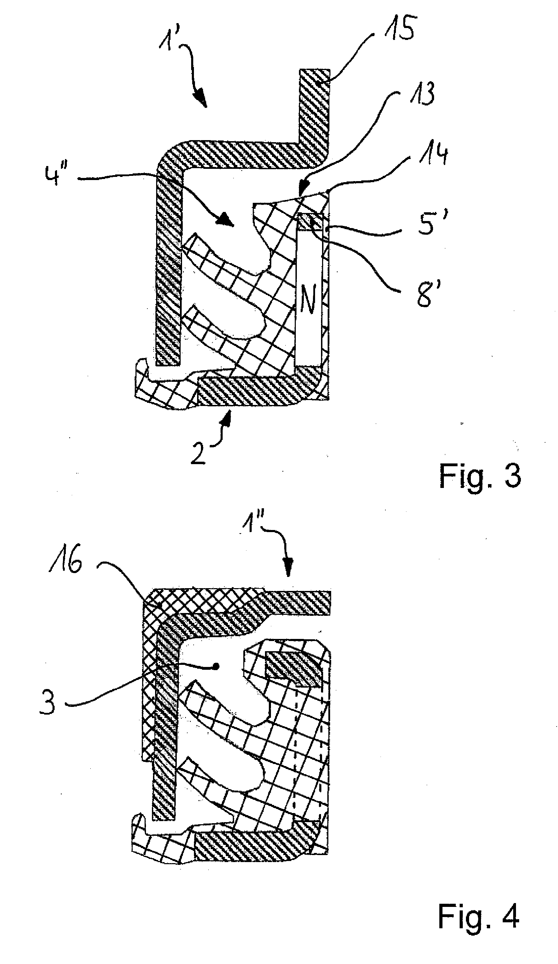

Des Weiteren ist in Figur 3 eine Ausführungsform der erfindungsgemäßen Dichtungsanordnung im Querschnitt dargestellt. Im Unterschied zu den vorherigen Varianten weist der statische Dichtungsteil 5' der Hauptdichtung 4" in diesem Fall eine in Richtung des äußeren Rings 1' ausgeprägte Erhebung 13 auf, die nach axial außen gerichtet ist und über eine Kante 14 verfügt. Bei Rotation des inneren Rings 2 werden insbesondere Flüssigkeiten, die auf den radialen Abschnitt 8' auftreffen, aufgrund der durch die Rotation erzeugten Fliehkräfte nach radial außen abgelenkt. Hierbei wird durch die Kante 14 in diesem Bereich ein Strömungsabriss erzeugt, was das Hineingelangen der abgeschleuderten Flüssigkeiten in den zwischen dem äußeren Ring 1' und dem radialen Abschnitt 8' gebildeten Spalt verhindert. Als weiterer Unterschied verfügt der äußere Ring 1' über eine, nach radial außen weisende Erstreckung 15, die einen axialen Anschlag bei der Montage der erfindungsgemäßen Dichtungsanordnung ausbildet.

Aus Figur 4 geht ferner eine dritte Dichtungsanordnung hervor. In diesem Fall weist der äußere Ring 1" im Unterschied zu den anderen Varianten in axialer Richtung einen abgewinkelten Verlauf auf und ist auf den, dem Innenraum 3 abgewendeten Flächen teilweise mit einer statischen Dichtung 16 versehen. Mit Hilfe dieser statischen Dichtung 16 wird ein Eintrag von Verschmutzungen über einen, zwischen dem äußeren Ring 1" und dem jeweils daran anschließenden Element gebildeten Spalt wirksam verhindert.

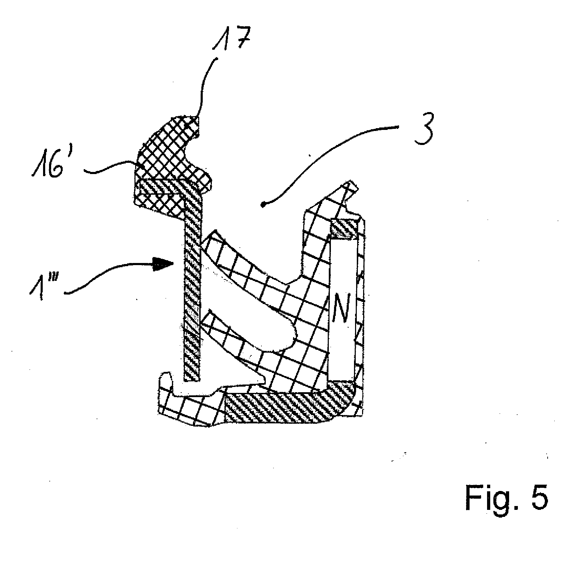

Schließlich ist in Figur 5 eine vierte Dichtungsanordnung im Querschnitt zu sehen. Hierbei ist zu erkennen, dass im Unterschied zu den im Vorfeld beschriebenen Varianten der äußere Ring 1"' scheibenartig ausgeführt und dem Innenraum 3 abgewendet platziert ist. Des Weiteren bildet die statische Dichtung 16' im Bereich des Außendurchmessers des äußeren Rings 1"' eine umlaufende Montagelippe 17 aus, über welche der äußere Ring 1"' bei der Montage in eine korrespondierende Rinne des jeweils umgebenden Elements eingeklippt werden kann. Hierbei wird eine Begrenzung des Innenraums 3 in außenradiale Richtung durch dieses, umliegende Element erreicht.

Durch die erfindungsgemäße Dichtungsanordnung kann folglich ein Eintrag von Verschmutzungen in den jeweils abzudichtenden Raum wirksam verhindert werden. Die platzsparende und zuverlässige Integrierung eines Encoders für einen aktiven Sensor, beispielsweise einem induktiven oder einen magnetoresistiven Drehzahlsensor, macht die Anordnung zudem insbesondere für Radlager von Kraftfahrzeugen geeignet. Die Merkmale der im Vorfeld beschriebenen Ausführungsformen der Erfindung sind dabei nicht auf die einzelnen Ausführungen beschränkt, sondern untereinander kombinierbar. Zudem kommt anstatt einer Platzierung von Ausnehmungen 9 im radialen Abschnitt 8 auch eine, in Umfangsrichtung homogen gewellte Ausführung des radialen Abschnitts in Betracht, um durch die somit in axiale Richtung gebildete Kontur einen Encoder für einen aktiven Sensor auszubilden.

### Bezugszeichen

- 1, 1', 1'', 1''': äußerer Ring
- 2: innerer Ring
- 3: Innenraum
- 4, 4', 4'': Hauptdichtung
- 5, 5': statischer Dichtungsteil
- 6a, 6b: Dichtlippen
- 7: radialer Abschnitt äußerer Ring
- 8, 8': radialer Abschnitt innerer Ring
- 9: Ausnehmungen
- 10: Rinne
- 11: Radialdichtlippe
- 12: Polareale
- 13: Erhebung
- 14: Kante
- 15: Erstreckung
- 16, 16': statische Dichtung
- 17: Montagelippe

## Patentansprüche

1. Dichtungsanordnung, insbesondere für eine Radlagerung eines Kraftfahrzeuges, umfassend einen äußeren, feststehenden Ring (1; 1'; 1"; 1"') und einen inneren, rotierbaren Ring (2), welche in einem, zwischen sich ausgebildeten Innenraum (3) eine Hauptdichtung (4; 4'; 4") mit zumindest einer Dichtlippe (6a, 6b) aufnehmen, die sich zwischen radialen Abschnitten (7, 8; 7, 8') des inneren (2) und des äußeren Rings (1; 1'; 1 "; 1"') in axialer Richtung und nach radial außen orientiert erstreckt, wobei die Hauptdichtung (4; 4'; 4") mit dem inneren Ring (2) über einen statischen Dichtungsteil (5; 5'), welcher den radialen Abschnitt (8; 8') des inneren Ringes (2) vollständig umgibt, verbunden ist und der radiale Abschnitt (8; 8') des inneren Ringes (2) Mittel eines Encoders für einen Drehzahlsensor ausbildet, und wobei elastische Haltemittel vorgesehen sind, welche ein axiales Abgleiten des inneren Ringes (2) von dem äußeren Ring (1; 1'; 1"; 1"') in eine Richtung unterbinden,
**dadurch gekennzeichnet, dass** der statische Dichtungsteil (5') am Ende des radialen Abschnitts (8') des inneren Rings (2) eine, in Richtung des äußeren Rings (1') ausgeprägte und dem Innenraum (3) abgewendete Erhebung (13) mit einer Kante (14) aufweist.

2. Dichtungsanordnung nach Anspruch 1,
**dadurch gekennzeichnet, dass** die Mittel des Encoders in Form von mehreren Ausnehmungen (9) vorliegen, welche äquidistant zueinander auf einer geschlossenen Kreisbahn des Umfangs des radialen Abschnitts (8) verteilt sind.

3. Dichtungsanordnung nach Anspruch 1,
**dadurch gekennzeichnet, dass** die Mittel des Encoders in Form einer Anordnung gleichartiger, dauermagnetischer Nord- und Südpolareale (12) vorliegen, welche alternierend auf einer geschlossenen Kreisbahn des Umfangs des radialen Abschnitts (8') angeordnet sind.

4. Dichtungsanordnung nach einem der Ansprüche 1-3,
**dadurch gekennzeichnet, dass** die Haltemittel durch eine axiale Verlängerung des statischen Dichtungsteils (5; 5') mit einer umlaufenden, radial in Richtung des äußeren Rings (1; 1'; 1"; 1"') hervorstehenden Rinne (10) gebildet sind.

5. Dichtungsanordnung nach einem der vorhergehenden Ansprüche,
**dadurch gekennzeichnet, dass** die Hauptdichtung (4') über eine Radialdichtlippe (11) verfügt, die sich ausgehend von dem radialen Abschnitt (8') des inneren Rings (2) in Richtung des äußeren Rings (1) und dem Innenraum (3) abgewendet erstreckt.

6. Dichtungsanordnung nach Anspruch 5,
**dadurch gekennzeichnet, dass** die Radialdichtlippe (11) mit dem äußeren Ring (1) oder einem umgebenden Element in Kontakt steht.

7. Dichtungsanordnung nach einem der vorhergehenden Ansprüche,
**dadurch gekennzeichnet, dass** der äußere Ring (1 "; 1"'), insbesondere an seinen, dem Innenraum (3) abgewendeten Flächen, ganz oder teilweise mit einer statischen Dichtung (16; 16') versehen ist.

8. Dichtungsanordnung nach Anspruch 7,
**dadurch gekennzeichnet, dass** die statische Dichtung (16') im Bereich eines Außendurchmessers des äußeren Rings (1"') eine umlaufende Montagelippe (17) ausbildet.

9. Dichtungsanordnung nach einem der vorhergehenden Ansprüche,
**dadurch gekennzeichnet, dass** der äußere Ring (1') über eine, nach radial außen weisende Erstreckung (15) verfügt.

10. Radlager eines Kraftfahrzeuges, umfassend zumindest eines Dichtungsanordnung nach einem der Ansprüche 1-9, welche einen Encoder eines je zugehörigen Drehzahlsensors ausbildet.

## Claims

1. Seal assembly, in particular for a wheel bearing of a motor vehicle, comprising an outer, stationary ring (1; 1'; 1"; 1"') and an inner, rotatable ring (2), which, in an inner space (3) formed between them, receive a main seal (4; 4'; 4") with at least one sealing lip (6a, 6b), which extends, oriented in the axial direction and radially outwards, between radial portions (7, 8; 7, 8') of the inner (2) and of the outer (1; 1'; 1"; 1"') ring, the main seal (4; 4'; 4'') being connected to the inner ring (2) via a static seal part (5; 5') which completely surrounds the radial portion (8; 8') of the inner ring (2), and the radial portion (8; 8') of the inner ring (2) forming means of an encoder for a rotational speed sensor, and elastic holding means being provided, which prevent the inner ring (2) from sliding off axially from the outer ring (1; 1'; 1''; 1"') in one direction,
**characterized in that** the static seal part (5') has, at the end of the radial portion (8') of the inner ring (2), an elevation (13) which is stamped out in the direction of the outer ring (1') and faces away from the inner space (3) and which has an edge (14).

2. Seal assembly according to Claim 1,
**characterized in that** the means of the encoder are in the form of a plurality of recesses (9) which are distributed equidistantly from one another on a closed circular path of the circumference of the radial portion (8).

3. Seal assembly according to Claim 1,
**characterized in that** the means of the encoder are in the form of an arrangement of identical permanent-magnetic north and south pole areas (12) which are arranged alternately on a closed circular path of the circumference of the radial portion (8').

4. Seal assembly according to one of Claims 1-3,
**characterized in that** the holding means are formed by an axial prolongation of the static seal part (5; 5') with a peripheral groove (10) projecting radially in the direction of the outer ring (1; 1'; 1''; 1"').

5. Seal assembly according to one of the preceding claims,
**characterized in that** the main seal (4') has a radial sealing lip (11) which extends from the radial portion (8') of the inner ring (2) in the direction of the outer ring (1) and so as to face away from the inner space (3).

6. Seal assembly according to Claim 5,
**characterized in that** the radial sealing lip (11) is in contact with the outer ring (1) or with a surrounding element.

7. Seal assembly according to one of the preceding claims,
**characterized in that** the outer ring (1"; 1''') is provided, particularly on its faces facing away from the inner space (3), completely or partially with a static seal (16; 16').

8. Seal assembly according to Claim 7,
**characterized in that** the static seal (16') forms a peripheral mounting lip (17) in the region of an outside diameter of the outer ring (1"').

9. Seal assembly according to one of the preceding claims,
**characterized in that** the outer ring (1') has an extent (15) pointing radially outwards.

10. Wheel bearing of a motor vehicle, comprising at least one seal assembly according to one of Claims 1-9 which forms an encoder of an in each case associated rotational speed sensor.

## Revendications

1. Ensemble d'étanchéité, en particulier pour un palier de roue d'un véhicule automobile, comportant une bague extérieure fixe (1 ; 1' ; 1" ; 1"') et une bague intérieure rotative (2), lesquelles reçoivent, dans un espace intérieur (3) formé entre elles, un joint d'étanchéité principal (4 ; 4' ; 4") comprenant au moins une lèvre d'étanchéité (6a, 6b) qui s'étend entre des portions radiales (7, 8 ; 7, 8') de la bague intérieure (2) et de la bague extérieure (1 ; 1' ; 1" ; 1"') de manière orientée dans la direction axiale et radialement vers l'extérieur, le joint d'étanchéité principal (4 ; 4' ; 4") étant relié à la bague intérieure (2) par le biais d'une partie d'étanchéité statique (5 ; 5'), laquelle entoure complètement la portion radiale (8 ; 8') de la bague intérieure (2), et la portion radiale (8 ; 8') de la bague intérieure (2) formant des moyens d'un codeur pour un capteur de vitesse de rotation, et des moyens de retenue élastiques étant prévus, lesquels empêchent la bague intérieure (2) de glisser axialement par rapport à la bague extérieure (1 ; 1' ; 1" ; 1"') dans une direction,
**caractérisé en ce que** la partie d'étanchéité statique (5') comprend, à l'extrémité de la portion radiale (8') de la bague intérieure (2), un rehaussement (13) estampé dans la direction de la bague extérieure (1') et opposé à l'espace intérieur (3), lequel rehaussement comprend une arête (14).

2. Ensemble d'étanchéité selon la revendication 1,
**caractérisé en ce que** les moyens du codeur sont présents sous la forme de plusieurs évidements (9), lesquels sont répartis de manière équidistante les uns par rapport aux autres sur un trajet circulaire fermé de la périphérie de la portion radiale (8).

3. Ensemble d'étanchéité selon la revendication 1,
**caractérisé en ce que** les moyens du codeur sont présents sous la forme d'un agencement de régions identiques de pôle Nord et Sud à aimantation permanente (12), lesquelles sont agencées en alternance sur un trajet circulaire fermé de la périphérie de la portion radiale (8').

4. Ensemble d'étanchéité selon l'une quelconque des revendications 1 à 3,
**caractérisé en ce que** les moyens de retenue sont formés au moyen d'un prolongement axial de la partie d'étanchéité statique (5 ; 5') par une rainure périphérique (10) faisant saillie radialement en direction de la bague extérieure (1 ; 1' ; 1" ; 1"').

5. Ensemble d'étanchéité selon l'une quelconque des revendications précédentes,
**caractérisé en ce que** le joint d'étanchéité principal (4') présente une lèvre d'étanchéité radiale (11) qui s'étend à partir de la portion radiale (8') de la bague intérieure (2) en direction de la bague extérieure (1) et à l'opposé de l'espace intérieur (3).

6. Ensemble d'étanchéité selon la revendication 5,
**caractérisé en ce que** la lèvre d'étanchéité radiale (11) est en contact avec la bague extérieure (1) ou avec un élément environnant.

7. Ensemble d'étanchéité selon l'une quelconque des revendications précédentes,
**caractérisé en ce que** la bague extérieure (1" ; 1"') est pourvue entièrement ou partiellement d'un joint d'étanchéité statique (16 ; 16'), en particulier sur ses surfaces opposées à l'espace intérieur (3).

8. Ensemble d'étanchéité selon la revendication 7,
**caractérisé en ce que** le joint d'étanchéité statique (16') forme une lèvre de montage périphérique (17) dans la région d'un diamètre extérieur de la bague extérieure (1" ').

9. Ensemble d'étanchéité selon l'une quelconque des revendications précédentes,
**caractérisé en ce que** la bague extérieure (1') présente une étendue (15) orientée radialement vers l'extérieur.

10. Palier de roue d'un véhicule automobile, comportant au moins un ensemble d'étanchéité selon l'une quelconque des revendications 1 à 9, lequel forme un codeur d'un capteur de vitesse de rotation associé respectif.
